# EUROPÄISCHE PATENTSCHRIFT

(11) **EP 3 523 089 B1**
(45) Veröffentlichungstag und Bekanntmachung des Hinweises auf die Patenterteilung: **17.08.2022**
(21) Anmeldenummer: 17787126.6
(22) Anmeldetag: 04.10.2017
(51) Int. Cl.: B23Q 5/04, B23Q 5/56, F16H 57/12

(54) **BOHR-FRÄS-EINRICHTUNG MIT EINER EINRICHTUNG ZUR VERGLEICHMÄSSIGUNG VON DREHMOMENT UND DREHZAHL DER SPINDEL**
DRILLING-MILLING DEVICE HAVING A DEVICE FOR EVENING OUT THE TORQUE AND THE ROTATIONAL SPEED OF THE SPINDLE
DISPOSITIF D'ALÉSAGE-FRAISAGE COMPORTANT UN DISPOSITIF D'ÉGALISATION DU COUPLE ET DE LA VITESSE DE LA BROCHE

(30) Priorität: 04.10.2016 DE 102016118766
(43) Veröffentlichungstag der Anmeldung: 14.08.2019
(73) Patentinhaber: WTO Vermögensverwaltung GmbH, 77797 Ohlsbach (DE)
(72) Erfinder: FAUTZ, Tobias, 77736 Zell am Harmersbach (DE); KREUTZER, Thomas, 77966 Kappel-Grafenhausen (DE); JANSEN, Karlheinz, 77746 Schutterwald (DE)
(74) Vertreter: DREISS Patentanwälte PartG mbB
(86) Internationale Anmeldenummer: PCT/EP2017/075253
(87) Internationale Veröffentlichungsnummer: WO 2018/065488

(56) Entgegenhaltungen:
- EP-A1- 0 094 392
- EP-A2- 1 900 969
- BE-A- 437 356

## Beschreibung

Die Erfindung betrifft eine Bohr- und/oder Fräs-Einrichtung, die an einer Werkzeugaufnahme einer numerisch gesteuerten Werkzeugmaschine, insbesondere einem Drehzentrum oder einem Bearbeitungszentrum, befestigt ist. Häufig sind Drehzentren mit einem Werkzeug-Revolver ausgestattet. Dieses Einsatzgebiet ist ein Hauptanwendungsgebiet der erfindungsgemäßen Einrichtung; sie ist jedoch nicht darauf beschränkt, sondern kann an allen Werkzeugaufnahmen von NC-gesteuerten Werkzeugmaschinen eingesetzt werden.

Ein solches angetriebenes Werkzeug ist beispielsweise aus der BE 437 356 A und der DE 39 30 787 C2 bekannt. Es umfasst eine Spindel in der das Werkzeug aufgenommen ist und eine Antriebswelle, welche mit einer Abtriebswelle der Werkzeugmaschine angetrieben wird.

Ein weiteres gattungsgemäßes Ausführungsbeispiel einer Bohr-Fräs-Einrichtung ist aus der DE 20 2015 008 987 U1 bekannt. Diese Bohr- und/oder Fräs-Einrichtungen sind nicht auf das Bohren oder Fräsen beschränkt. Prinzipiell kann in die Spindeln dieser Einrichtungen jedes beliebige Werkzeug eingespannt werden. Im Folgenden wird zur sprachlichen Vereinfachung die Bezeichnungen die Bezeichnung "Bohr-Fräs-Einrichtung" verwendet, ohne den Einsatzbereich der erfindungsgemäßen Einrichtung dadurch auf diese Bearbeitungen einschränken zu wollen.

Die DE 1 098 328 B offenbart eine Bohr-Fräs-Einrichtung umfassend ein Gehäuse, eine Antriebswelle, eine Spindel und eine Bremse, wobei die Antriebswelle und die Spindel über ein Getriebe miteinander gekoppelt sind, wobei die Bremse mit dem Getriebe gekoppelt ist und ein Bremsmoment der Bremse auf das Gehäuse übertragen wird.

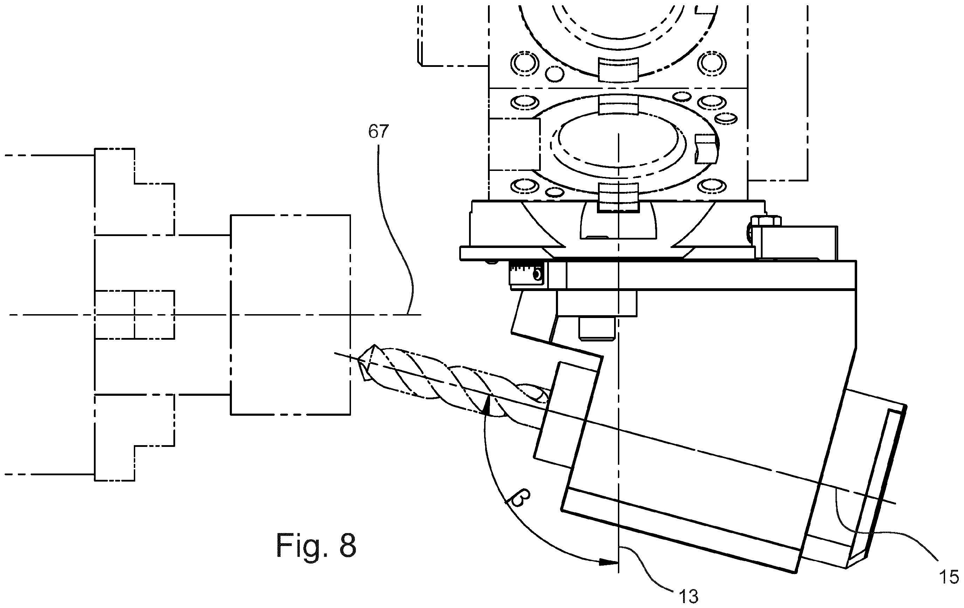

Diese Bohr-Fräs-Einrichtungen sind so gebaut, dass die Spindel und die Antriebswelle oftmals rechtwinklig zueinander angeordnet sind. Andere von 90° abweichende Winkel +/- β oder auch in dieser zusätzlichen Ebene einstellbare Winkel +/-β (-180° bis 0° bis + 180°) sind ebenfalls möglich und aus am Markt erhältlichen angetriebenen Werkzeugen bereits bekannt. Der Winkel β wird weiter unten anhand der Figur 8 näher erläutert.

Wenn der Winkel β = 0° oder = 180° ist sind die Drehachsen von Spindel und die Antriebswelle parallel. Bei einem Winkel β = 0° zeigt das Werkzeug von der Maschinenaufnahme weg. Bei einem Winkel β = 180° zeigt das Werkzeug zur Maschinenaufnahme hin. Meistens haben die Spindel und die Antriebswelle bei diesen Winkeln β in diesen einen Achsversatz und ein Stirnrad-Getriebe überträgt die Leitung von der Antriebswelle auf die Spindel. Für den Sonderfall, dass der Winkel β = 0° der Achsversatz ebenfalls = 0, entfällt das Getriebe und die Antriebswelle ist gleichzeitig Bestandteil der Spindel.

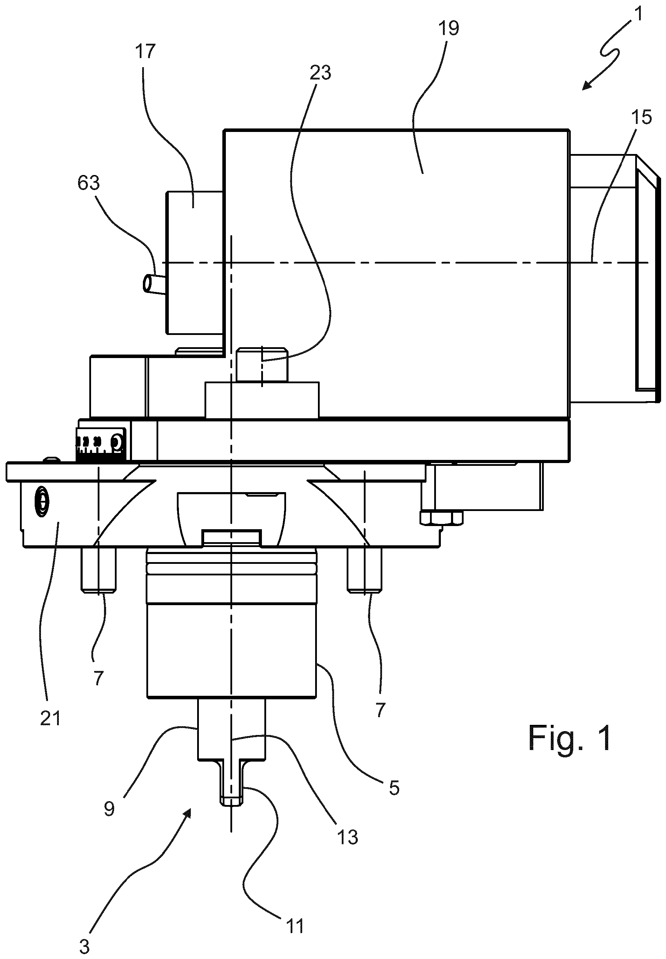

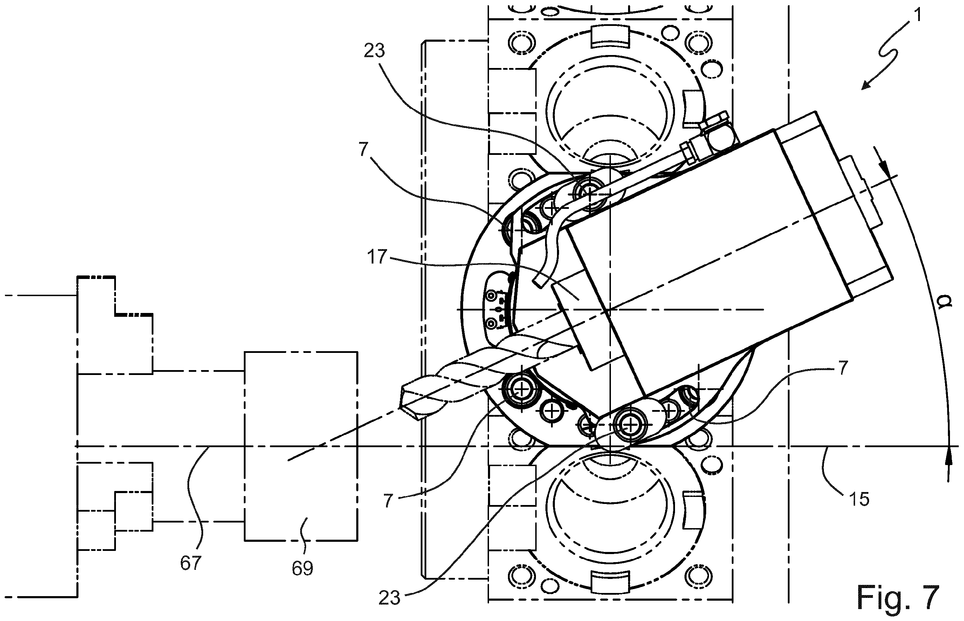

Außerdem ist die Achse der Spindel bezüglich der Achse der Antriebswelle verschwenkbar (Winkel +/- a), so dass auch schräge Bohrungen, Flächen oder Profile hergestellt werden können. Der Schwenkwinkel α wird weiter unten anhand der Figuren 1 und 7 näher erläutert.

Die zunehmenden Anforderungen an eine leistungsfähige spanende Fertigung auf Dreh- oder Bearbeitungszentren und anderen numerisch gesteuerten Werkzeugmaschinen mit angetriebenen Werkzeugen geht einher mit immer höheren Anforderungen an die Qualität bzw. die Präzision, mit der die Werkstücke gefertigt werden können.

Der beanspruchten Erfindung liegt die Aufgabe zugrunde, eine Bohr-Fräs-Einrichtung bereitzustellen, die für verschiedenste Anwendungen eine weiter erhöhte Zerspanleistung und/oder eine verbesserte Qualität der bearbeiteten Oberflächen ermöglicht. Gleichzeitig sollen die Standzeit des Werkzeugs und die Lebensdauer der Bohr-Fräs-Einrichtung signifikant erhöht werden.

Diese Aufgabe wird bei einer Bohr-Fräs-Einrichtung umfassend ein Gehäuse, eine Antriebswelle und eine Spindel, wobei die Antriebswelle und die Spindel über ein Getriebe miteinander gekoppelt sind, dadurch gelöst, dass die Bohr-Fräs-Einrichtung eine Einrichtung zur Vergleichmäßigung von Drehmoment und/oder Drehgeschwindigkeit der Spindel umfasst, und dass diese Einrichtung mit der Spindel gekoppelt oder in diese integriert ist.

In einer nicht erfindungsgemäßen Ausführung wird die Vergleichmäßigung von Drehmoment und/oder Drehgeschwindigkeit der Spindel durch eine erhöhte Schwungmasse der Spindel selber oder durch eine zusätzliche, mit der Spindel verbundene aufgesetzte Schwungmasse erreicht. Das angestrebte große Massenträgheitsmoment der Spindel bzw. der Schwungmasse kann durch die Geometrie von Spindel und Schwungmasse (Durchmesser, Länge) erreicht werden. Darüber hinaus kann durch den Einsatz von Werkstoffen mit besonders großem spezifischem Gewicht, wie zum Beispiel Blei, Tantal oder Wolfram, ein großes Massenträgheitsmoment bei sehr kompakten Abmessungen erreichen.

Die dämpfende Wirkung dieser Schwungmasse kann weiter erhöht werden, wenn die Schwungmasse als Zwei-Massen-Schwungrad ausgebildet ist. Zwischen beiden Schwungmassen ist ein elastisches (Feder-)Element vorhanden. Dieses Prinzip ist aus der Automobiltechnik in Form von Zweimassenschwungrädern oder -kupplungen bekannt.

In einer erweiterten nicht erfindungsgemäßen Ausführungsform kann die Massenverteilung der Schwungmasse verändert werden. Je weiter die Masse von der Drehachse der Spindel entfernt sind, desto höher ist das Massenträgheitsmoment. Dadurch ändert sich auch die vergleichmäßigende Wirkung der Schwungmasse. Insbesondere können die Eigenfrequenzen des Systems "Werkzeug, Spindel, Schwungmasse und Antriebswelle" durch Änderung des Massenträgheitsmoments der Schwungmasse gezielt so verändert werden, dass die Bearbeitungsqualität und/oder die Standzeit des Werkzeugs optimiert werden. Nicht immer lassen sich beide Zielgrößen gleichzeitig optimieren. Dann muss eine Zielgröße Vorrang haben.

Diese Änderung der Schwungmasse wird idealerweise während des Betriebs der erfindungsgemäßen Bohr-Fräs-Einrichtung bei drehender Spindel und Antriebswelle vorgenommen.

Diese Veränderungen werden durch einen Regelkreis gesteuert, der Signale geeigneter Sensoren (Drehzahl, Drehmoment, Temperatur, Schwingungen) verarbeitet und entsprechend der oder den Zielgrößen "Optimierung der Bearbeitungsqualität oder/und Lebensdauer der Schneidwerkzeuge oder/und Lebensdauer der Bohr-Fräs-Einrichtung die günstigste Schwungmassenverteilung festlegt.

In einer erfindungsgemäßen Ausführungsform wird die angestrebte Vergleichmäßigung durch eine Bremse erreicht, die mit der Spindel gekoppelt ist und das Bremsmoment an das Gehäuse der Bohr-Fräs-Einrichtung überträgt.

Durch die Bremse wird den beim Zerspanen auftretenden Drehmomenten, die von der Antriebswelle auf die Spindel übertragen werden, von vorneherein ein von der Zerspanung unabhängiges Bremsmoment überlagert. Dieses Bremsmoment führt dazu, dass während der Bearbeitung, selbst wenn die Zerspanung mit einem unterbrochenen Schnitt stattfindet, immer ein Drehmoment von der Antriebswelle auf die Spindel übertragen wird. Dies hat zur Folge, dass bei einem Zahnradgetriebe zwischen Antriebswelle und Spindel immer die gleichen Seiten der Zahnflanken der beteiligten Zahnräder in Kontakt bleiben. Über das Bremsmoment kann die Anpresskraft mit der die Zahnflanken aneinander gepresst werden eingestellt werden. Diese Anpresskraft führt dazu, dass ein aus fertigungstechnischen Gründen immer vorhandenes Flankenspiel zwischen den im Eingriff befindlichen Zahnrädern des Getriebes eliminiert wird und somit für die Präzision der Werkstückbearbeitung keine Rolle spielt.

Außerdem werden die Lagersysteme durch das von der Bremse erzeugte Bremsmoment bereits vor dem Zerspanungsprozess vorgespannt. Das verbessert die Bearbeitungsqualität weiter. Der Einsatz der erfindungsgemäßen Bohr-Fräs-Einrichtung bei bereits vorhandenen und in Produktion befindlichen Dreh- oder Fräszentren führt zu deutlichen Verbesserungen der Bearbeitungsqualität sowie der Lebensdauer der Schneidwerkzeuge und der Bohr-Fräs-Einrichtung.

In einer erweiterten Ausführungsform kann die Bremswirkung verändert werden, wodurch sich eine Anpassung des überlagerten Drehmoments ergibt. Diese Veränderungen werden durch einen Regelkreis, der Signale geeigneter Sensoren (Drehzahl, Drehmoment, Temperatur, Schwingungen) verarbeitet und hinsichtlich der Bearbeitungsoptimierung oder/und Lebensdauer der Schneidwerkzeuge oder/und Lebensdauer der Bohr-Fräs-Einrichtung optimiert, festgelegt.

Auch ein Einsatz der erfindungsgemäßen Bohr-Fräs-Einrichtung beim Wälzschälen ist mit Hilfe dieser Bremse möglich. Beim Wälzschälen kommt es ganz besonders auf eine exakte Zuordnung der Drehwinkelposition des Werkstücks bzw. der Werkstückspindel einerseits und der Drehwinkelposition des Werkzeugs, das in der Spindel der erfindungsgemäßen Bohr-Fräs-Einrichtung eingespannt ist, an.

Bei einem vorteilhaften Ausführungsbeispiel der erfindungsgemäßen Bohr-Fräs-Einrichtung wird als Bremse eine aus dem Stand der Technik bekannte Visko-Kupplung eingesetzt. Eine Kupplung verbindet üblicherweise zwei Wellen miteinander, während beim erfindungsgemäßen Einsatz als Bremse eine Seite der Kupplung mit der Spindel direkt oder indirekt gekoppelt ist und die andere Seite der Kupplung mit dem Gehäuse verbunden ist. Eine solche Visko-Kupplung umfasst zwei Gruppen von Lamellen, die mit einem geringen axialen Abstand zueinander angeordnet sind.

Die erste Gruppe der Lamellen ist bei der Erfindung drehfest mit der Spindel verbunden. Die zweite Gruppe von Lamellen ist drehfest mit dem Gehäuse der Bohr-Fräs-Einrichtung verbunden. In den Spalten zwischen den beiden Gruppen von Lamellen befindet sich ein fluides Medium (z.B. ein Öl- oder Fett, oder eine rheologische Flüssigkeit, das ist eine Flüssigkeit deren Viskosität sich ändert, wenn sie sich die Feldstärke eines Magnetfelds, dem die Flüssigkeit ausgesetzt ist, ändert) mit einer hohen Viskosität. Dadurch entstehen Scherspannungen zwischen den Lamellen der ersten Gruppe und den Lamellen der zweiten Gruppe, wenn die Spindel angetrieben wird. In Folge dessen entsteht das gewünschte Bremsmoment.

Ein Vorteil zu dieser zu einer Bremse umfunktionierten Visko-Kupplung ist darin zu sehen, dass die Bremswirkung der Bremse auf einfache Weise und auch nachträglich geändert werden kann. Dies geschieht durch die Änderung der Füllmenge und/oder der Viskosität des fluiden Mediums (z.B. Öl oder Fett). Vorteilhafterweise können Silikonöle eingesetzt werden, die auf dem Markt in verschiedenen Viskositäten zu kaufen sind.

Wenn mehr Silikonöl eingefüllt wird, erhöht sich bei gleicher Viskosität die Bremswirkung. Selbstverständlich ist es auch möglich, die Bremse zu deaktivieren, indem das gesamte Silikonöl aus der Bremse entfernt wird.

Das Auswechseln des Silikonöls ist einfach machbar, indem eine Verschlussschraube aus dem Gehäuse herausgedreht wird und das vorhandene Silikonöl abgelassen oder abgesaugt wird und neues Silikonöl oder ein anderes fluides Medium eingefüllt wird.

Weiterhin kann die Bremswirkung durch Veränderung der Anzahl der Lamellen und des Abstandes zwischen den Lamellen und geometrischer Ausgestaltung der Lamellengeometrie eingestellt werden.

Wenn die Visko-Bremse mit einer rheologischen Flüssigkeit gefüllt ist, kann die Bremswirkung durch Anlegen oder Ändern eines Magnetfelds, das die Bremse erfasst, auf einfache Weise gesteuert werden.

Weiterhin sind als Fluidbremsen, die aus der Kupplungsindustrie bekannten Retarderkupplungen einsetzbar. Eine Seite dieser Retarderkupplungen ist drehfest mit dem Gehäuse verbunden, die andere Seite ist mit der Spindel gekoppelt.

Das Ändern der Menge des Fluids in einer Visko-Kupplung oder einem Retarder - und damit auch die Bremswirkung - kann auch während des Betriebs vorgenommen werden.

Alternativ ist es bevorzugt auch möglich, dass ein elektrischer Generator eingesetzt wird. Bevorzugt ist der elektrische Generator regelbar, so dass auch hier auf einfache Weise das Bremsmoment und damit die Dämpfung den Forderungen entsprechend eingestellt werden kann. Wenn als Bremse ein elektrischer Generator eingesetzt wird, dann kann die beim Bremsen von der Spindel abgegebene mechanische Energie wieder in elektrische Energie umgewandelt werden (Rekuperation).

Eine Kopplung der Maschinensteuerung und angeschlossener Sensoren (z.B. (Dreh-)Schwingungsaufnehmer, Drehzahloder/und Drehmomentaufnehmer) mit der Regelelektronik der Magnetbremse oder des elektrischen Generators kann zu einer überwachten und geregelten Bremswirkung führen, um optimale Werkstückoberflächen und die beschriebenen erhöhten Standzeiten der Schneidwerkzeuge zu erzielen.

Da in der erfindungsgemäßen Bremse mechanische Energie in Wärmeenergie umgewandelt wird, ist es vorteilhaft, wenn die erfindungsgemäße Bremse aktiv gekühlt wird. Dies kann besonders vorteilhaft dadurch geschehen, dass die Bohr-Fräs-Einrichtung eine interne Kühlschmiermittelversorgung umfasst und die Bremse von dem durch die Kühlschmiermittelversorgung strömenden Kühlschmiermittel gekühlt wird. Bei leistungsfähigen Bohr-Fräs-Einrichtungen sind Kühlschmiermittelversorgungen seit vielen Jahren Stand der Technik. Es ist erfindungsgemäß vorgesehen, die im Gehäuse der Bohr-Fräs-Einrichtung verlaufenden Kühlschmiermittelleitungen so zu legen, dass sie die Bremse aktiv kühlen. Anschließend wird dieses um wenige Grad Celsius erwärmte Kühlschmiermittel seinem eigentlichen Zweck zugeführt, nämlich dem Kühlen und Schmieren des Schneidwerkzeugs bzw. des Werkstücks. Die durch die Wärmeaufnahme an der Bremse stattfindende Erhöhung der Temperatur des Kühlschmiermittels um wenige Grad Celsius hat keinen Einfluss auf seine Eignung als Kühlschmiermittel. Daher ist diese Art der aktiven Kühlung nicht nur sehr leistungsfähig, sondern auch sehr kostengünstig.

Die erfindungsgemäße Bohr-Fräs-Einrichtung ist zum Einsatz in verschiedensten Drehzentren und Bearbeitungszentren geeignet. Insbesondere ist sie kompatibel mit allen gängigen mechanischen Schnittstellen von Stern-, Scheibenund Kronenrevolvern. Dadurch kann die erfindungsgemäße Bohr-Fräs-Einrichtung in den Drehzentren oder Bearbeitungszentren verschiedenster Hersteller eingesetzt werden.

Diese Kompatibilität der erfindungsgemäßen Bohr-Fräs-Einrichtung betrifft auch die Antriebswelle. Die Antriebswelle ist an ihrem dem Revolver zugewandten Ende so ausgebildet, dass sie vom Revolver angetrieben werden kann. Dazu kann sie zum Beispiel mit einem Zweiflach ausgestattet sein. Es gibt jedoch auch Revolver, die an ihrer Abtriebswelle eine Innenverzahnung aufweisen. Dementsprechend weist die Antriebswelle der erfindungsgemäßen Bohr-Fräs-Einrichtung eine Außenverzahnung auf. Wie bereits erwähnt, sind bezüglich der Schnittstelle zwischen einem Revolver und der angetriebenen Bohr-Fräs-Einrichtung alle Varianten möglich, die es erlauben, eine erfindungsgemäße Bohr-Fräs-Einrichtung auf einem am Markt befindlichen Revolver aufzusetzen. Selbstverständlich kann die erfindungsgemäße Bohr-Fräs-Einrichtung auch ohne weiteres an zukünftig auf dem Markt erscheinende mechanische Schnittstellen adaptiert werden.

Um den Einsatzbereich der erfindungsgemäßen Bohr-Fräs-Einrichtung weiter zu vergrößern, ist vorgesehen, dass die Bohr-Fräs-Einrichtung eine Schwenkeinrichtung aufweist. Mit deren Hilfe ist es möglich, die Spindel um eine Drehachse der Antriebswelle zu verschwenken. Dies ist beim Bohren oder Fräsen häufig erforderlich. Auch beim Wälzschälen ist eine solche Verschwenkbarkeit notwendig. Solche Schwenkeinrichtungen sind aus dem Stand der Technik bereits bekannt.

In weiterer vorteilhafter Ausgestaltung der Erfindung weist die Spindel der erfindungsgemäßen Bohr-Fräs-Einrichtung eine Werkzeugaufnahme auf. Dabei können alle am Markt befindlichen Werkzeugaufnahmen eingesetzt werden. Voraussetzung ist selbstverständlich, dass das Werkzeug ausreichend genau gespannt und fest eingespannt wird, um die zum Bearbeiten erforderliche Antriebsleistung und Kräfte übertragen zu können. Als besonders geeignete Werkzeugaufnahmen haben sich Spannzangen, Dehnspannfutter, Hohlschaftkegelaufnahmen (wie HSK, PSC, Coromant Capto^{®}, KM) und Fräsdornaufnahmen erwiesen.

Weitere Vorteile und vorteilhafte Ausgestaltungen der Erfindung sind der nachfolgenden Zeichnung, deren Beschreibung und den Patentansprüchen entnehmbar, wobei die Erfindung durch die Ansprüche definiert wird.

Es zeigen:
- Figur 1: eine Seitenansicht eines Ausführungsbeispiels einer erfindungsgemäßen Bohr-Fräs-Einrichtung;
- Figur 2: eine Ansicht von vorne auf die Spindel der erfindungsgemäßen Bohr-Fräs-Einrichtung;
- Figur 3: eine Ansicht von unten auf die erfindungsgemäße Bohr-Fräs-Einrichtung;
- Figur 4: einen Schnitt durch eine erfindungsgemäße Bohr-Fräs-Einrichtung;
- Figur 5: eine isometrische Darstellung der erfindungsgemäßen Bohr-Fräs-Einrichtung;
- Figur 6: eine isometrische Ansicht von unten auf das Gehäuse der erfindungsgemäßen Bohr-Fräs-Einrichtung sowie
- Figur 7 und 8: weitere Darstellungen der erfindungsgemäßen Bohr-Fräs-Einrichtung.

In den Figuren wird ein Ausführungsbeispiel in verschiedenen Ansichten dargestellt. Alle Bezugszeichen sind daher figurenübergreifend gleich gewählt worden.

Die Figur 1 zeigt eine Seitenansicht einer erfindungsgemäßen Bohr-Fräs-Einrichtung 1. Die Bohr-Fräs-Einrichtung 1 umfasst eine mechanische Schnittstelle 3, die mit einem Revolver eines nicht dargestellten Drehzentrums oder Bearbeitungszentrums kompatibel ist. Die mechanische Schnittstelle 3 umfasst bei diesem Ausführungsbeispiel einen zylindrischen Abschnitt 5 und mehrere Nuten (nicht sichtbar in Fig. 1). Der zylindrische Abschnitt 5 und die Nuten die mit passenden Gegenstücken auf der Revolverseite zusammenarbeiten, positionieren die Bohr-Fräs-Einrichtung 1 exakt auf einem Revolver (nicht dargestellt). Außerdem werden darüber hinaus die zwischen Bohr-Fräs-Einrichtung 1 und Revolver wirkenden Kräfte und Momente übertragen. Mit den Schrauben 7 wird die Bohr-Fräs-Einrichtung 1 mit dem Revolver verschraubt.

Da es sich bei der Bohr-Fräs-Einrichtung 1 um ein angetriebenes Werkzeug handelt, ist im Bereich der mechanischen Schnittstelle 3 eine Antriebswelle 9 ausgebildet, die bei diesem Ausführungsbeispiel an ihrem in Figur 1 unteren Ende einen Zweiflach 11 aufweist. Eine Drehachse der Antriebswelle ist mit 13 bezeichnet. Mit Hilfe dieses Zweiflachs 11, der in eine komplementär ausgebildete Nut einer Abtriebswelle des nicht dargestellten Revolvers eingreift, wird die erforderliche Antriebsleistung vom Revolver auf die Antriebswelle 9 übertragen. Auch dieser Teil der mechanischen Schnittstelle zwischen Bohr-Fräs-Einrichtung 1 und Revolver ist aus dem Stand der Technik bekannt. Im Übrigen ist die mechanische Schnittstelle 3 der erfindungsgemäßen Bohr-Fräs-Einrichtung 1 nicht auf dieses Ausführungsbeispiel beschränkt, sondern kann auf alle am Markt verfügbaren und in Zukunft auf dem Markt angebotenen Werkzeugaufnahmen von NC-gesteuerten Werkzeugmaschinen, insbesondere Drehzentren oder Bearbeitungszentren und deren Schnittstelle für angetriebene Werkzeuge adaptiert werden.

Bei diesem Ausführungsbeispiel sind der zylindrische Abschnitt 5 und die Antriebswelle 9 konzentrisch zueinander angeordnet.

In der Figur 1 verläuft eine Drehachse 15 einer Spindel 17 waagerecht. Die Drehachsen 13 und 15 bilden somit einen rechten Winkel (β = 90°).

An dem in Figur 1 linken Ende der Spindel 17 wird das zur Bearbeitung erforderliche Werkzeug (nicht dargestellt) eingespannt.

Die Spindel 17 ist in einem Gehäuse 19 der Bohr-Fräs-Einrichtung 1 drehbar gelagert. An dem in der Figur 1 rechten Ende des Gehäuses 19 ist eine erfindungsgemäße Bremse (nicht sichtbar in dieser Figur) eingebaut. Das Gehäuse 19 und mit ihm die Spindel 17 kann relativ zu der mechanischen Schnittstelle 3 um die Drehachse 13 verschwenkt werden. Zu diesem Zweck ist unterhalb des Gehäuses 19 ein Drehteller 21 vorhanden, der fest mit der mechanischen Schnittstelle 3 zum maschinenseitigen Revolver oder einer anderen Werkzeugaufnahme verbunden ist. An der Oberseite des Drehtellers 21 wird das Gehäuse 19 aufgesetzt und drehbar gelagert. Mit Hilfe von Klemmpratzen und Klemmschrauben 23 kann das Gehäuse 19 in einer einmal eingestellten Schwenkstellung auf dem Drehteller 21 fixiert werden. Diese Art der Schwenklagerung ist zum Beispiel von Maschinenschraubstöcken und anderen Werkzeugen bekannt. Daher wird auf die konstruktiven Details dieser Schwenkeinrichtung nicht näher eingegangen. Um den eingestellten Schwenkwinkel α direkt ablesen zu können, ist eine Skala am Gehäuse 19 angeordnet.

Der Drehteller 21 kann bedingt durch diesen Aufbau vorab auf dem Revolver über die Schrauben 7 befestigt werden. Dadurch ist es unproblematisch, wenn diese Schrauben 7 nach der Montage des Gehäuses 19 auf dem Drehteller 21 nicht mehr zugänglich sind. In einem weiteren Schritt erfolgt die Befestigung des Gehäuses 19 auf dem Drehteller 21 unabhängig von den Positionen der Schrauben 7 mit den bereits erwähnten Klemmpratzen und Klemmschrauben 23.

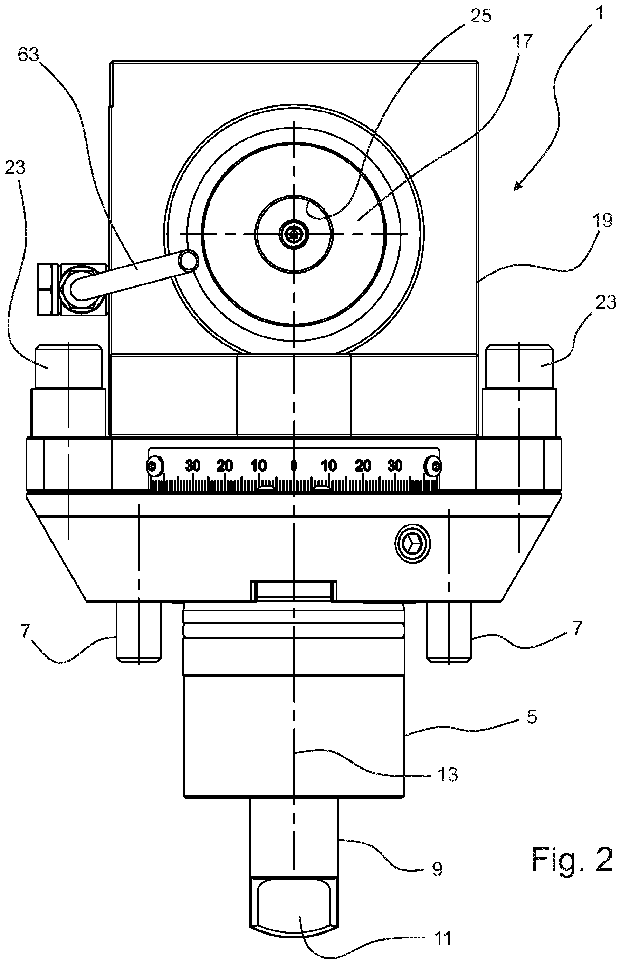

Die Figur 2 zeigt eine Ansicht von vorne auf die Bohr-Fräs-Einrichtung 1. In dieser Ansicht sind die Spindel 17 mit einer Werkzeugaufnahme 25, die mechanischen Schnittstelle 3, die Schwenkeinrichtung mit dem Drehteller 21 sowie die Skala zum Ablesen des Schwenkwinkels α gut zu erkennen.

Die Werkzeugaufnahme 25 ist bei diesem Ausführungsbeispiel als Dehnspanfutter ausgebildet. Dadurch lassen sich höchste Rundlaufgenauigkeiten und kurze Werkzeugwechselzeiten realisieren. Allerdings sind auch andere Ausführungsformen von Werkzeugaufnahmen möglich. Insbesondere ist es möglich, mit einer Spannzangenaufnahme (nicht dargestellt) die ebenfalls nicht dargestellten Werkzeuge in der Spindel 17 bzw. der Werkzeugaufnahme 25 zu spannen.

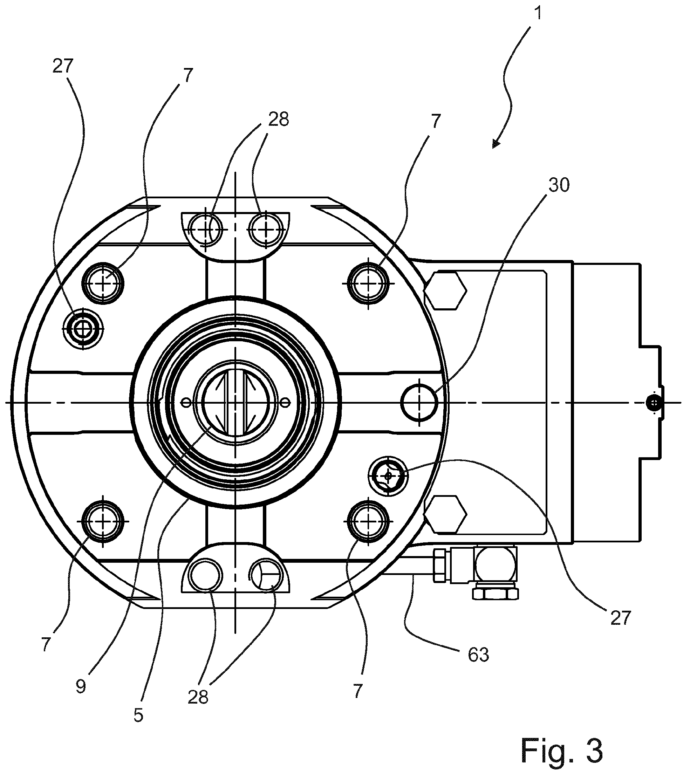

Die Figur 3 zeigt eine Ansicht von unten auf die erfindungsgemäße Bohr-Fräs-Einrichtung. In dieser Ansicht ist die mechanische Schnittstelle 3 gut zu erkennen. Insbesondere sind der zylindrische Abschnitt 5, die Antriebeswelle 9 mit dem Zweiflach 11 und die Schrauben 7 gut sichtbar. In der mechanischen Schnittstelle 3 ist auch noch mindestens eine Bohrung vorhanden. Diese Bohrung ist Teil der Kühlschmiermittelversorgung 27 und wurde daher mit dem Bezugszeichen 27 versehen.

An der gegenüberliegenden Stelle weist der Revolver bzw. die Werkzeugaufnahme der Werkzeugmaschine eine ähnliche Bohrung auf und fördert das Kühlschmiermittel in die Bohrung 27. Damit die Bohr-Fräs-Einrichtung 1 auf der Werkzeugaufnahme um 180° versetzt und betrieben werden, ist gegenüber der ersten Bohrung 27 eine zweite Bohrung 27 in der Bohr-Fräs-Einrichtung 1 vorhanden. Die nicht benötigte Bohrung 27 wird dann ggf. über einen Gewindestift verschlossen.

In der Figur 3 sind außerdem vier Gewindebohrungen 28 vorhanden. In die Gewindebohrungen 28 werden die Klemmschrauben 23 eingedreht. In der Nut ist eine Bohrung 30 vorhanden. In diese Bohrung 29 kann man einen Stift einstecken, wenn die Bohr-Fräs-Einrichtung auf einen Schwenkwinkel α = 0° arretiert werden soll.

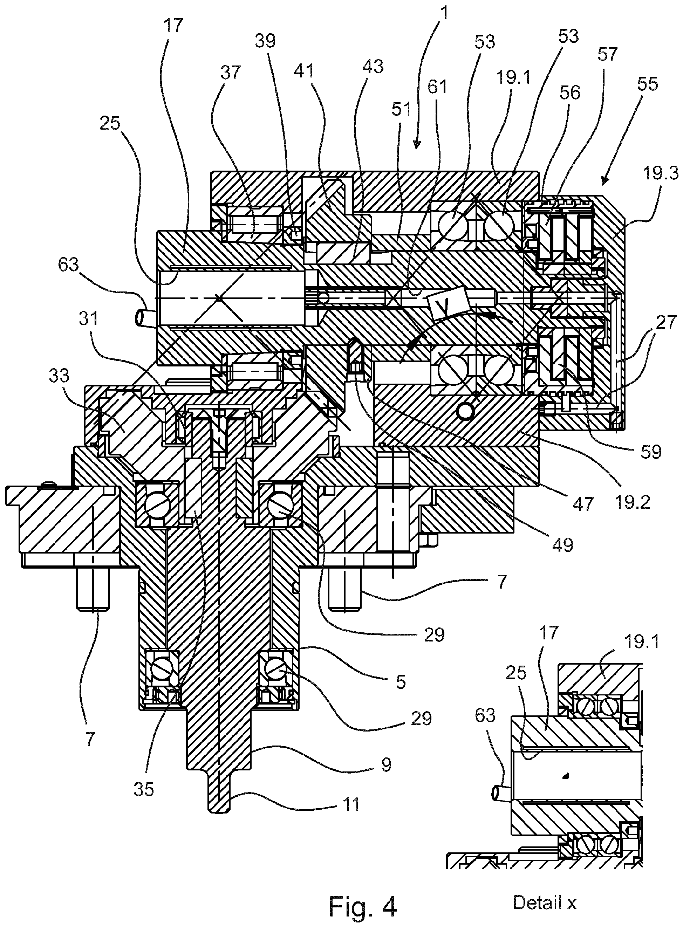

In der Figur 4 ist die erfindungsgemäße Bohr-Fräs-Einrichtung 1 geschnitten dargestellt. Aus der Figur 4 wird deutlich, dass die Antriebswelle 9 mit insgesamt drei Wälzlagern, nämlich zwei Schrägkugellagern 29 und einem Stützlager 31 im zylindrischen Abschnitt 5 bzw. im Gehäuse 19 drehbar gelagert ist. Der Lageraufbau mit dem zusätzlichen Stützlager 31 dient dazu, die sich aus den Verzahnungskräften ergebende Auslenkung des ersten Kegelrades 33 soweit wie möglich zu minimieren, um die sich aus der Verlagerung ergebende Drehwinkelabweichung maximal möglich zu reduzieren und bei auftretenden Schwingungen im Antriebsstrang zusätzlich zu dämpfen.

An dem in Figur 4 oberen Ende der Antriebswelle 9 ist ein erstes Kegelrad 33 drehfest mit der Antriebswelle 9 verbunden. Dies erfolgt über Längsnuten und Passfedern 35 in an sich bekannter Weise. Die Längsnuten in der Antriebswelle 9 haben kein Bezugszeichen.

Die Spindel 17 ist im Bereich der Werkzeugaufnahme 25 in spielfreien Lagern gelagert. Diese Lagerung z.B. kann durch eine O-Anordnung von Schrägkugellagern erreicht werden. Diese Konstruktionsvariante ist im Detail "X" dargestellt. Um die radiale Steifigkeit der Lagerung weiter zu erhöhen, kann die Spindel 17 im Bereich der Werkzeugaufnahme 25 in einem Zylinderrollenlager 37 gelagert werden, wie dies in der Figur 4 dargestellt ist.

Der Innenring des Zylinderrollenlagers 37 ist bei diesem Ausführungsbeispiel leicht konisch ausgebildet. In komplementärer Weise ist die Spindel 17 in diesem Bereich kegelstumpfförmig ausgebildet. Wenn der Innenring des Zylinderrollenlagers 37 durch eine Mutter 39 gegen den Kegelstumpf der Spindel 17 gepresst wird, weitet er sich geringfügig auf. Bei der Montage kann auf diese Weise eine spielfreie Lagerung der Spindel 17 erreicht werden. Es kann sogar vorteilhaft sein, wenn eine gewisse Vorspannung durch entsprechendes Anziehen der Mutter 39 eingestellt wird.

Durch diese Konstruktion wird im Bereich der Werkzeugaufnahme 25 eine spielfreie und in radialer Richtung extrem belastbare Lagerung der Spindel 17 bzw. des in der Werkzeugaufnahme 25 eingespannten Werkzeugs (nicht dargestellt) erreicht. Das ist unter anderem für das Wälzschälen sehr wichtig, um eine gute Bearbeitungsqualität zu erreichen.

An das Zylinderrollenlager 37 schließt sich in der Figur 4 auf der rechten Seite ein zweites Kegelrad 41 an. Auch das zweite Kegelrad 41 ist drehfest mit Hilfe einer oder mehrerer Passfedern 43 mit der Spindel 17 verbunden.

Damit das zweite Kegelrad 41 ohne Drehspiel mit der Spindel 17 verbunden ist, ist der Passfeder 43 gegenüberliegend in der Spindel 17 eine kegelförmige Vertiefung 45 ausgearbeitet. Leicht versetzt zu dieser kegelförmigen Vertiefung 45 ist eine Gewindebohrung 47 in dem zweiten Kegelrad 41 ausgebildet. Der Versatz zwischen der Vertiefung 45 und der Gewindebohrung 47 ist sowohl in axialer Richtung als auch in Umfangsrichtung vorhanden.

Wegen dieses geringen Versatzes zwischen der Vertiefung 45 und der Gewindebohrung 47 wird durch das Eindrehen des Gewindestifts 49 das zweite Kegelrad 41 in Umfangsrichtung gegen die Passfeder 43 und damit auch gegen die Spindel 17 verspannt. Dadurch wird eine spielfreie Verbindung hergestellt. Der gleiche Aufbau ist auch in der Verbindung der Antriebswelle 9 zum ersten Kegelrad 33 enthalten, aber hier nicht sichtbar, da die Gewindestifte um 90° zur Passfeder 43 versetzt sind.

In der Figur 4 rechts des zweiten Kegelrads 41 ist eine Distanzhülse 51 vorhanden. Daran schließen sich zwei Schrägkugellager 53 in O-Anordnung an, die einen Druckwinkel γ aufweisen.

Die Außenringe der Kugellager 53 stützen sich gegen einen Absatz im Gehäuseteil 19 ab. Der Innenring des in Figur 4 linken Kugellagers 53 stützt sich gegen die Distanzhülse 51 ab. Durch diese Konstruktion können Axialkräfte übertragen werden und es ergibt sich eine steife Axiallagerung der Spindel 17. Durch Lager mit einem Druckwinkel γ > 25° kann die Spindel sehr große Axialkräfte aufnehmen und bildet damit eine sehr steife Axiallagerung.

Aus fertigungstechnischen bzw. montagetechnischen Gründen ist das Gehäuse 19 dreiteilig ausgebildet. Das größte Teil ist mit 19.1 bezeichnet und trägt die Lagerung der Spindel 17. Unterhalb dieses Gehäuseteils 19.1 ist ein zweites Gehäuseteil 19.2 vorhanden. In Figur 4 am rechten Ende des ersten Gehäuseteils 19.1 ist ein drittes Gehäuseteil 19.3 vorhanden, welches im Wesentlichen die Bremse 55 aufnimmt. Bei dem dargestellten Ausführungsbeispiel ist die Bremse 55 als Lamellenkupplung ausgebildet, wobei eine erste Gruppe von Lamellen drehfest mit der Spindel 17 verbunden ist und die zweite Gruppe von Lamellen drehfest mit dem dritten Gehäuse 19.3 bzw. dem ersten Gehäuseteil 19.1 verbunden ist. Aus dieser Darstellung wird deutlich, dass im Gehäuse 19.3 ein Trägerelement (ohne Bezugszeichen) eine erste Gruppe von Lamellen 57 trägt. In entsprechender Weise wird eine zweite Gruppe von Lamellen 59 an der Spindel 17 befestigt. Aus Gründen der Übersichtlichkeit ist jeweils nur eine Lamelle 57 bzw. 59 mit Bezugszeichen versehen. In axialer Richtung sind die Lamellen 57 und 59 zueinander beabstandet angeordnet. Die ersten Lamellen 57 sind drehfest mit dem Gehäuse 19 und die zweiten Lamellen 59 sind drehfest mit der Spindel 17 verbunden.

In den Räumen zwischen den Lamellen 57 und 59 befindet sich Silikonöl (nicht dargestellt). Aufgrund der Scherkräfte zwischen den Lamellen 57 und 59 und dem Silikonöl entsteht ein drehzahlabhängiges Bremsmoment in der Bremse 55 sobald sich die Spindel 17 dreht.

Dieses Bremsmoment hängt auch von den Abmessungen der Bremse 55 ab. Es kann sehr einfach verändert werden, indem die Füllmenge des Silikonöls variiert wird. Das Bremsmoment kann weiter durch die Auswahl der Viskosität des Silikonöls gesteuert werden. Hier sind am Markt verschiedene Silikonöle mit verschiedenen Viskositäten verfügbar. Wenn die Bremse 55 ausgeschaltet werden soll, wird einfach das Silikonöl aus dem Gehäuse bzw. der Bremse 55 entfernt. Dann entsteht ein Luftspalt zwischen den Lamellen 57 und 59, der nahezu keine Bremswirkung hat, weil die Viskosität der Luft extrem niedrig ist.

Um die in der Bremse 55 entstehende Wärme auch beim Dauerbetrieb der Bohr-Fräs-Einrichtung 1 abführen zu können, ist die Kühlschmiermittelversorgung 27 der Bohr-Fräs-Einrichtung 1 so ausgebildet, dass im Gehäuse 19 Bohrungen vorgesehen sind, die vor allem im dritten Gehäuseteil 19.3 die Bremse 55 umgeben. Diese Bohrungen sind Teil der Kühlschmiermittelversorgung und haben deshalb das Bezugszeichen 27. Die Kühlschmiermittelversorgung 27 endet in der Drehachse 15 der Spindel 17.

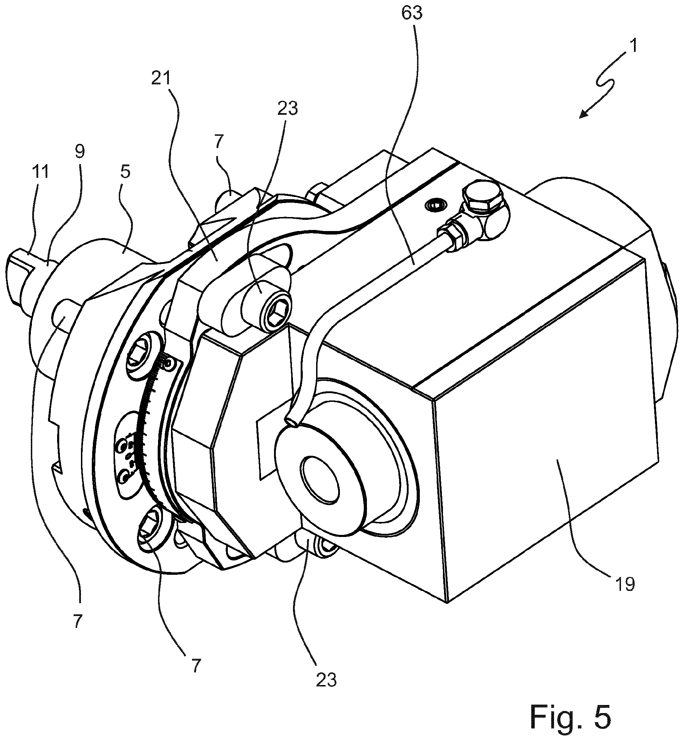

Die Spindel 17 ist bei dem dargestellten Ausführungsbeispiel hohl gebohrt, so dass das Kühlschmiermittel, nachdem es die Bremse 55 gekühlt hat, über eine zentrale Durchgangsbohrung 61 der Spindel 17 in den Bereich der Werkzeugaufnahme 25 gelangt. Dort kann am Werkzeug (nicht dargestellt) eine entsprechende Bohrung vorgesehen sein, die das Kühlschmiermittel zum Werkzeug leitet. Alternativ ist es auch möglich, das Kühlschmiermittel nach außen zu führen und von dort auf das Werkstück zu richten. In den Figuren 2 und 5 ist eine solche externe Fortsetzung der Kühlschmiermittelversorgung 27 mit dem Bezugszeichen 63 versehen. Bei diesem Ausführungsbeispiel strömt das Kühlschmiermittel nicht durch die Bohrung 61 der Spindel 17.

Die Figur 5 zeigt eine Isometrie der Bohr-Fräs-Einrichtung schräg von oben. In ihr sind drei der vier BefestigungsSchrauben 7 sichtbar mit deren Hilfe die Bohr-Fräs-Einrichtung 1 auf einem Revolver oder einer anderen Werkzeugaufnahme (nicht dargestellt) festgeschraubt wird. Sie können als Teil der mechanischen Schnittstelle 3 betrachtet werden. In dieser Ansicht sind auch die Klemmpratzen und die Klemmschrauben 23 gut zu sehen mit denen die Bohr-Fräs-Einrichtung 1 auf dem Drehteller 21 festgeschraubt wird.

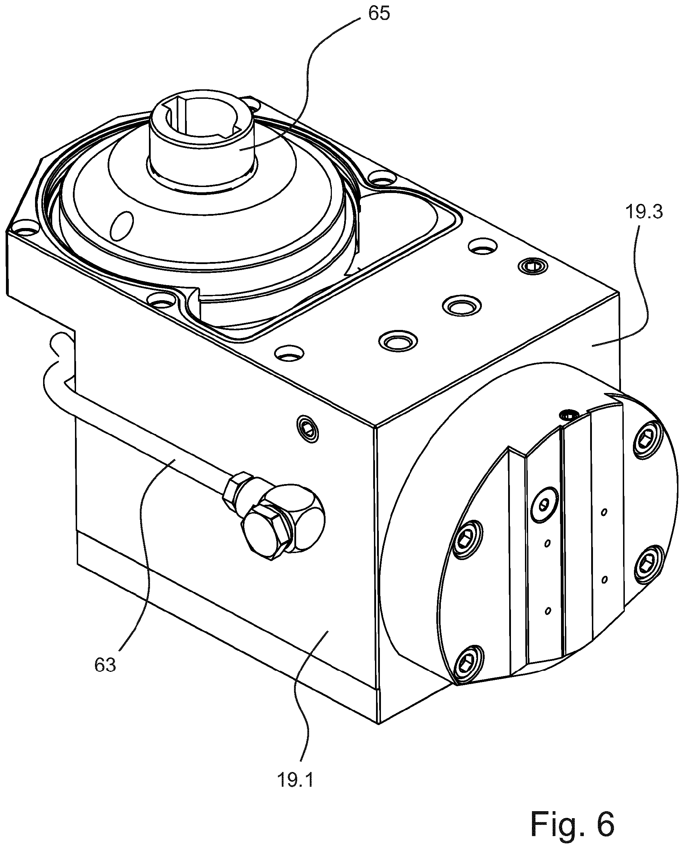

Insbesondere aus der Figur 6 wird deutlich, dass die Unterseite des Gehäuses 19.1 so ausgestaltet ist, dass sie mit Gehäuse 19.2 zusammenwirkt. Mit dem Bezugszeichen 65 ist ein Lagersitz bezeichnet, der eines der Schrägkugellager 29 (siehe Figur 4) trägt.

Die Figuren 7 und 8 dienen dazu, die Winkel α und β zu veranschaulichen. Außerdem soll beispielhaft die Anordnung der Bohr-Fräs-Einrichtung 1 auf einem Revolver und deren relative Lage bezüglich des in einem Backenfutter eingespannten Werkstücks 69 exemplarisch illustriert werden. Weil der Revolver und das Werkstück 69 nicht Teil der Erfindung sind, wurden sie mit strichpunktierten Linien dargestellt.

In der Figur 7 ist eine Draufsicht auf die erfindungsgemäße Bohr-Fräs-Einrichtung 1 dargestellt. Die Drehachse 15 der Spindel 17 und die Drehachse 67 der Hauptspindel der NC-gesteuerten Werkzeugmaschine schließen den Schwenkwinkel α ein. Dadurch können auch schräge Bohrungen, Flächen oder Profile in das Werkstück 69 eingebracht werden.

In der Figur 8 ist eine Seitenansicht der erfindungsgemäßen Bohr-Fräs-Einrichtung 1 dargestellt. Die Drehachse 15 der Spindel 17 und die Drehachse 13 Antriebswelle 9 schließen den Winkel β ein.

## Patentansprüche

1. Bohr-Fräs-Einrichtung umfassend ein Gehäuse (19), eine Antriebswelle (9), eine Spindel (17) und eine Bremse (55), wobei die Antriebswelle (9) und die Spindel (17) über ein Getriebe miteinander gekoppelt sind, wobei die Bremse mit der Spindel (17) gekoppelt ist und ein Bremsmoment der Bremse (55) auf das Gehäuse (19) übertragen wird, **dadurch gekennzeichnet, dass** die Bremse (55) eine Visko-Bremse (55) oder ein elektrischer Generator ist.

2. Bohr-Fräs-Einrichtung nach Anspruch 1 **dadurch gekennzeichnet, dass** die Bremse über einen Regelkreis verfügt, der Signale geeigneter Sensoren, wie z.B. Drehzahl-, Drehmoment-, Temperatur- oder Schwingungssensoren, verarbeiten kann und die Bremswirkung hinsichtlich der Bearbeitungsoptimierung oder/und Lebensdauer der Schneidwerkzeuge oder/und Lebensdauer der Bohr-Fräs-Einrichtung optimieren kann.

3. Bohr-Fräs-Einrichtung nach einem der Ansprüche 1 oder 2, **dadurch gekennzeichnet, dass** die Bremse (55) aktiv gekühlt wird.

4. Bohr-Fräs-Einrichtung nach einem der Ansprüche 1 bis 3, **dadurch gekennzeichnet, dass** sie eine Kühlschmiermittelversorgung (27) umfasst, und dass die Bremse (55) von dem durch die Kühlschmiermittelversorgung (27) strömenden Kühlschmiermittel gekühlt wird.

5. Bohr-Fräs-Einrichtung nach Anspruch 4, **dadurch gekennzeichnet, dass** die Kühlschmiermittelversorgung (27) Bohrungen im Gehäuse (19) umfasst.

6. Bohr-Fräs-Einrichtung nach Anspruch 4 oder 5, **dadurch gekennzeichnet, dass** die Kühlschmiermittelversorgung (27) eine Bohrung (61) in der Spindel (17) umfasst.

7. Bohr-Fräs-Einrichtung nach einem der vorhergehenden Ansprüche, **dadurch gekennzeichnet, dass** sie auf einer Antriebsseite mit einer Aufnahme eines Dreh- oder Bearbeitungszentrums kompatibel ist.

8. Bohr-Fräs-Einrichtung nach den Ansprüchen 1 bis 6, **dadurch gekennzeichnet, dass** sie auf der Antriebsseite mit einer Revolverschnittstelle passend zu einem Drehzentrum ausgebildet ist.

9. Bohr-Fräs-Einrichtung nach einem der vorhergehenden Ansprüche, **dadurch gekennzeichnet, dass** die Antriebswelle (9) einen Zweiflach (11) oder eine Mitnehmerverzahnung aufweist.

10. Bohr-Fräs-Einrichtung nach einem der vorhergehenden Ansprüche, **dadurch gekennzeichnet, dass** sie einen von 90° abweichenden Winkel (β) zwischen den Drehachsen (15, 13) Spindel (17) und Antriebswelle (9) hat.

11. Bohr-Fräs-Einrichtung nach einem der vorhergehenden Ansprüche, **dadurch gekennzeichnet, dass** sie eine Schwenkeinrichtung umfasst, und dass die Spindel (17) mit Hilfe der Schwenkeinrichtung um eine Drehachse (13) der Antriebswelle (9) oder einer dazu parallelen Achse um einen Schwenkwinkel (α) verschwenkbar ist.

12. Bohr- Fräs-Einrichtung nach einem der vorhergehenden Ansprüche, **dadurch gekennzeichnet, dass** die Spindel (17) eine Werkzeugaufnahme (25) aufweist.

13. Bohr- Fräs-Einrichtung nach Anspruch 12, **dadurch gekennzeichnet, dass** die Werkzeugaufnahme (25) ein Dehnspannfutter, eine Spannzangenaufnahme oder eine Hohlschaftkegelaufnahme oder eine Fräsdornaufnahme ist.

14. Bohr-Fräs-Einrichtung nach einem der vorhergehenden Ansprüche, **dadurch gekennzeichnet, dass** zwischen Antriebswelle (9) und Spindel (17) nur ein Zahnradpaar (33, 41) zur Leistungsübertragung eingesetzt wird.

15. Bohr-Fräs-Einrichtung nach einem der vorhergehenden Ansprüche, **dadurch gekennzeichnet, dass** sowohl die Antriebswelle (9) als auch die Spindel (17) durch Wälzlager, insbesondere Rillenkugellager (29), Schrägkugellager (53), Zylinderrollenlager (37) und/oder Kegelrollenlager, gelagert sind.

16. Bohr-Fräs-Einrichtung nach Anspruch 15, **dadurch gekennzeichnet, dass** die Schrägkugellager (53) einen Druckwinkel γ größer 25° haben.

17. Bohr-Fräs-Einrichtung nach einem der Ansprüche 15 oder 16, **dadurch gekennzeichnet, dass** die Spindel (17) im Bereich der Werkzeugaufnahme (25) durch zwei Schrägkugellager (53) in O-Anordnung gelagert ist.

18. Bohr-Fräs-Einrichtung nach einem der vorhergehenden Ansprüche, **dadurch gekennzeichnet, dass** die Spindel (17) im Bereich der Werkzeugaufnahme (25) mit einem Rollenlager (37) ausgerüstet ist, dessen Radialspiel einstellbar ist.

## Claims

1. Drilling-milling device comprising a housing (19), a drive shaft (9), a spindle (17) and a brake (55), the drive shaft (9) and the spindle (17) being coupled to one another by means of a gear mechanism, the brake being coupled to the spindle (17) and a braking torque of the brake (55) being transmitted to the housing (19), **characterized in that** the brake (55) is a viscous brake (55) or an electric generator.

2. Drilling-milling device according to claim 1, **characterized in that** the brake comprises a control loop which can process signals from suitable sensors such as rotational speed, torque, temperature or vibration sensors and can optimize the braking action with respect to the machining optimization and/or the service life of the cutting tools and/or the service life of the drilling-milling device.

3. Drilling-milling device according to claim 1 or claim 2, **characterized in that** the brake (55) is actively cooled.

4. Drilling-milling device according to any of claims 1 to 3, **characterized in that** it comprises a cooling-lubricant supply (27), and **in that** the brake (55) is cooled by the cooling lubricant flowing through the cooling-lubricant supply (27).

5. Drilling-milling device according to claim 4, **characterized in that** the cooling-lubricant supply (27) comprises holes in the housing (19).

6. Drilling-milling device according to claim 4 or claim 5, **characterized in that** the cooling-lubricant supply (27) comprises a hole (61) in the spindle (17).

7. Drilling-milling device according to any of the preceding claims, **characterized in that** it is compatible on a driving side with a holder of a turning or machining center.

8. Drilling-milling device according to claims 1 to 6, **characterized in that** it comprises, on the driving side, a turret interface suitable for a turning center.

9. Drilling-milling device according to any of the preceding claims, **characterized in that** the drive shaft (9) comprises a dihedron (11) or driving teeth.

10. Drilling-milling device according to any of the preceding claims, **characterized in that** it has an angle (β) deviating from 90° between the rotational axes (15, 13), the spindle (17) and the drive shaft (9).

11. Drilling-milling device according to any of the preceding claims, **characterized in that** it comprises a pivoting means, and **in that** the spindle (17) is pivotable about a rotational axis (13) of the drive shaft (9) by means of the pivoting means or is pivotable about a pivot angle (α) by means of an axis parallel to said rotational axis.

12. Drilling-milling device according to any of the preceding claims, **characterized in that** the spindle (17) comprises a tool holding fixture (25).

13. Drilling-milling device according to claim 12, **characterized in that** the tool holding fixture (25) is an expansion chuck, a collet holder or a hollow-shank taper holder or a milling arbor holder.

14. Drilling-milling device according to any of the preceding claims, **characterized in that** only one pair of gears (33, 41) is used for transmitting power between the drive shaft (9) and the spindle (17).

15. Drilling-milling device according to any of the preceding claims, **characterized in that** both the drive shaft (9) and the spindle (17) are mounted by means of roller bearings, in particular deep groove ball bearings (29), angular contact ball bearings (53), cylindrical roller bearings (37) and/or tapered roller bearings.

16. Drilling-milling device according to claim 15, **characterized in that** the angular contact ball bearings (53) have a pressure angle γ that is greater than 25°.

17. Drilling-milling device according to claim 15 or claim 16, **characterized in that** the spindle (17) is mounted in the region of the tool holding fixture (25) by means of two angular contact ball bearings (53) in an O-shaped arrangement.

18. Drilling-milling device according to any of the preceding claims, **characterized in that** the spindle (17) is equipped with a roller bearing (37) in the region of the tool holding fixture (25), the radial clearance of which bearing can be adjusted.

## Revendications

1. Dispositif d'alésage-fraisage comprenant un boîtier (19), un arbre d'entraînement (9), une broche (17) et un frein (55),
dans lequel l'arbre d'entraînement (9) et la broche (17) sont couplés l'un à l'autre par l'intermédiaire d'une transmission, dans lequel le frein est couplé à la broche (17) et un couple de freinage du frein (55) est transmis au boîtier (19), **caractérisé en ce que** le frein (55) est un frein visqueux (55) ou un générateur électrique.

2. Dispositif d'alésage-fraisage selon la revendication 1, **caractérisé en ce que** le frein dispose d'une boucle de régulation qui peut traiter des signaux de capteurs appropriés, tels que des capteurs de vitesse de rotation, de couple, de température ou d'oscillation, et qui peut optimiser l'action de freinage en ce qui concerne l'optimisation d'usinage et/ou la durée de vie des outils de coupe et/ou la durée de vie du dispositif d'alésage-fraisage.

3. Dispositif d'alésage-fraisage selon l'une quelconque des revendications 1 ou 2, **caractérisé en ce que** le frein (55) est à refroidissement actif.

4. Dispositif d'alésage-fraisage selon l'une quelconque des revendications 1 à 3, **caractérisé en ce qu'**il comprend une alimentation en lubrifiant de refroidissement (27), et **en ce que** le frein (55) est refroidi par le lubrifiant de refroidissement s'écoulant à travers l'alimentation en lubrifiant de refroidissement (27).

5. Dispositif d'alésage-fraisage selon la revendication 4, **caractérisé en ce que** l'alimentation en lubrifiant de refroidissement (27) présente des alésages dans le boîtier (19).

6. Dispositif d'alésage-fraisage selon la revendication 4 ou 5, **caractérisé en ce que** l'alimentation en lubrifiant de refroidissement (27) comprend un alésage (61) dans la broche (17).

7. Dispositif d'alésage-fraisage selon l'une quelconque des revendications précédentes, **caractérisé en ce qu'**il est compatible sur un côté d'entraînement avec un logement d'un centre de tournage ou d'usinage.

8. Dispositif d'alésage-fraisage selon les revendications 1 à 6, **caractérisé en ce qu'**il est réalisé du côté de l'entraînement avec une interface de tourelle adaptée à un centre de rotation.

9. Dispositif d'alésage-fraisage selon l'une quelconque des revendications précédentes, **caractérisé en ce que** l'arbre d'entraînement (9) présente une double face (11) ou une denture d'entraînement.

10. Dispositif d'alésage-fraisage selon l'une quelconque des revendications précédentes, **caractérisé en ce qu'**il présente un angle (β) différent de 90° entre les axes de rotation (15, 13) de la broche (17) et de l'arbre d'entraînement (9).

11. Dispositif d'alésage-fraisage selon l'une quelconque des revendications précédentes, **caractérisé en ce qu'**il comprend un dispositif de pivotement, et **en ce que** la broche (17) peut pivoter selon un angle de pivotement (α) à l'aide du dispositif de pivotement autour d'un axe de rotation (13) de l'arbre d'entraînement (9) ou d'un axe parallèle à celui-ci.

12. Dispositif d'alésage-fraisage selon l'une quelconque des revendications précédentes, **caractérisé en ce que** la broche (17) présente un logement d'outil (25).

13. Dispositif d'alésage-fraisage selon la revendication 12, **caractérisé en ce que** le logement d'outil (25) est un mandrin de serrage, un logement de pince de serrage ou un logement de cône de queue creux ou un logement de mandrin porte-fraise.

14. Dispositif d'alésage-fraisage selon l'une quelconque des revendications précédentes, **caractérisé en ce qu'**entre l'arbre d'entraînement (9) et la broche (17), seule une paire de roues dentées (33, 41) est utilisée pour une transmission de puissance.

15. Dispositif d'alésage-fraisage selon l'une des revendications précédentes, **caractérisé en ce que** l'arbre d'entraînement (9) et la broche (17) sont tous deux supportés par des paliers à roulement, en particulier des roulements rigides à billes (29), des roulements à contact angulaire (53), des roulements à rouleaux cylindriques (37) et/ou des roulements à rouleaux coniques.

16. Dispositif d'alésage-fraisage selon la revendication 15, **caractérisé en ce que** les roulements à contact angulaire (53) ont un angle de pression γ supérieur à 25°.

17. Dispositif d'alésage-fraisage selon l'une quelconque des revendications 15 ou 16, **caractérisé en ce que** la broche (17) est montée en O dans la région du logement d'outil (25) par deux roulements à contact angulaire (53).

18. Dispositif d'alésage-fraisage selon l'une quelconque des revendications précédentes, **caractérisé en ce que** la broche (17) est équipée, dans la zone du logement d'outil (25), d'un palier à rouleaux (37) dont le jeu radial peut être réglé.
